# FASCICULE DE BREVET EUROPEEN

(11) **EP 4 291 754 B1**
(45) Date de publication et mention de la délivrance du brevet: **22.01.2025**
(21) Numéro de dépôt: 22707807.8
(22) Date de dépôt: 09.02.2022
(51) Int. Cl.: F01D 5/02, F01D 5/30, B23P 6/00

(54) **PROCEDE DE REPARATION D'UNE BRIDE DE ROTOR DE TURBOMACHINE**
VERFAHREN ZUR REPARATUR EINER ENDPLATTE EINES TURBOMASCHINENROTORS
METHOD FOR REPAIRING AN END PLATE OF A TURBOMACHINE ROTOR

(30) Priorité: 11.02.2021 FR 2101307
(43) Date de publication de la demande: 20.12.2023
(73) Titulaire: SAFRAN AIRCRAFT ENGINES, 75015 Paris (FR)
(72) Inventeur: LEXILUS, Jean-Hilaire, 77550 MOISSY-CRAMAYEL (FR); BOT, Cédric, 77550 MOISSY-CRAMAYEL (FR); REGHEZZA, Patrick, Jean-Louis, 77550 MOISSY-CRAMAYEL (FR)
(74) Mandataire: Brevalex
(86) Numéro de dépôt international: PCT/FR2022/050234
(87) Numéro de publication internationale: WO 2022/171957

(56) Documents cités:
- FR-A1- 3 001 515
- FR-A1- 3 084 697
- FR-A1- 3 102 205
- US-A1- 2007 059 164
- US-B2- 8 888 458

## Description

### DOMAINE TECHNIQUE

L'invention concerne la réparation d'une bride d'un rotor de turbomachine, telle qu'une bride de disque de fan de turboréacteur.

### ÉTAT DE LA TECHNIQUE ANTÉRIEURE

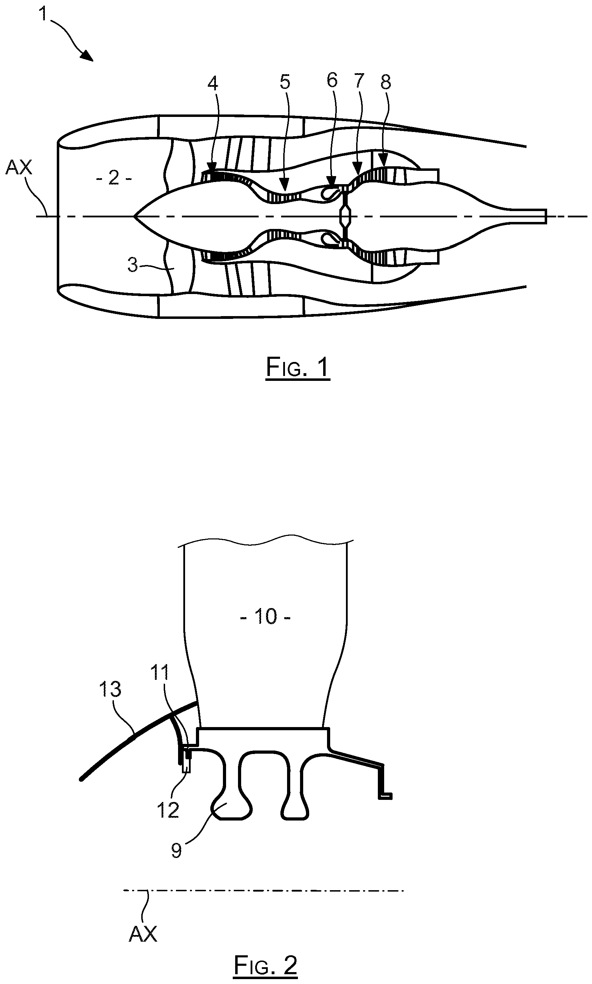

Dans un moteur de type turboréacteur, repéré par 1 dans la figure 1, l'air est admis dans une manche d'entrée 2 pour traverser une soufflante comportant une série de pales rotatives 3 avant de se scinder en un flux primaire central et un flux secondaire entourant le flux primaire.

Le flux primaire est comprimé par des compresseurs basse pression 4 et haute pression 5 avant d'atteindre une chambre de combustion 6, après quoi il se détend en traversant une turbine haute pression 7 et une turbine basse pression 8, avant d'être évacué en générant une poussée auxiliaire. Le flux secondaire est quant à lui propulsé directement par la soufflante pour générer une poussée principale.

Comme visible sur la figure 2, la soufflante 3 d'un tel turboréacteur comporte un disque 9 faisant partie d'un rotor tournant autour d'un axe longitudinal AX, et qui porte un ensemble d'aubes régulièrement réparties à sa circonférence, telles que l'aube 10.

Ce disque 9 comporte une bride amont 11 portant d'une part des masselottes d'équilibrage 12, et d'autre part un flasque 13 assurant un blocage axial des aubes. Le flasque 13 est fixé à la bride au moyen de vis engagées dans des écrous sertis dans la bride amont 11, alors que les masselottes sont fixées à cette bride par rivetage.

Le document FR 3 084 697 A1 décrit une couronne d'une bride de rotor de turbomachine avec des trous de fixation de flasque et des trous de fixation de masselotte. Chaque trou de fixation de masselotte étant équipé d'un écrou serti.

Le document FR 3 001 515 A1 décrit une couronne d'une bride de rotor de turbomachine avec trous de fixation de flasque et trous de fixation de masselotte.

Lors d'opérations de maintenance, il arrive que le démontage des masselottes conduise à détériorer localement la bride qui les porte, du fait que la fixation de ces masselottes à la bride par rivetage est problématique pour les désolidariser de celle-ci. La bride ou couronne présente en outre localement une faible épaisseur au niveau des masselottes, de manière à faciliter leur fixation par rivetage, ce qui favorise le risque de détérioration lors du démontage durant lequel des efforts importants peuvent être exercés.

La détérioration peut se traduire par une dégradation des trous de rivetage les rendant inutilisables, et par une déformation locale de la paroi constituant la bride.

Dans un tel cas, il est nécessaire de remplacer l'ensemble du disque, du fait qu'il s'agit d'une pièce complexe en alliage, de sorte qu'il n'est pas possible d'envisager une reprise d'une telle pièce.

Le but de l'invention est d'apporter une solution permettant d'assurer une réparation d'une bride de disque endommagée au niveau d'une fixation de masselotte d'équilibrage.

### EXPOSÉ DE L'INVENTION

A cet effet, l'invention a pour objet un procédé de réparation d'une couronne d'une bride de rotor de turbomachine, cette couronne comportant au moins deux trous de fixation de flasque et au moins un trou de fixation de masselotte situé entre les deux trous de fixation de flasque, chaque trou de fixation de flasque étant équipé d'un écrou serti, la couronne comportant une portion endommagée entre deux trous de fixation de flasque, le procédé comportant les étapes de :
- retirer les deux écrous sertis ;
- retirer la portion de couronne endommagée, par exemple par usinage ;
- rapporter une barrette en forme portion de couronne comblant la portion de couronne retirée, cette barrette comportant au moins un trou de fixation de masselotte, et deux trous de montage ;
- fixer la barrette à la couronne au moyen de deux écrous sertis traversant les trous de montage en étant sertis chacun dans un trou de fixation de flasque.

Cette solution permet ainsi de réparer la couronne de bride au lieu de devoir remplacer l'ensemble du composant de rotor portant cette bride.

L'invention concerne également un procédé ainsi défini, dans lequel les mêmes opérations sont réalisées à un emplacement de la couronne situé à 180° de la portion de couronne endommagée pour compenser le balourd introduit au niveau de la portion endommagée.

L'invention concerne également un procédé ainsi défini, dans lequel la barrette est rapportée à une face aval de la couronne par rapport au sens de circulation de fluide dans la turbomachine.

L'invention concerne également un procédé ainsi défini, dans lequel les écrous sertis utilisés pour fixer la barrette ont une longueur plus importante que les écrous sertis initialement montés sur la couronne.

L'invention concerne également un procédé ainsi défini, dans lequel la barrette présente une forme comportant une échancrure.

L'invention concerne également une turbomachine comportant un rotor ayant une bride réparée conformément au procédé ainsi défini.

L'invention concerne également un turboréacteur comportant une turbomachine ainsi définie.

### BRÈVE DESCRIPTION DES DESSINS

La Figure 1 est une vue en coupe longitudinale d'un turboréacteur connu ;
La Figure 2 est une vue en coupe longitudinale d'un disque de soufflante avec une portion d'aube portée par ce disque ;
La Figure 3 est une vue en perspective d'une portion de disque de soufflante devant être réparé conformément à l'invention ;
La Figure 4 est une vue en coupe longitudinale montrant un écrou serti équipant une couronne amont du disque de soufflante devant être réparé ;
La Figure 5 est une vue en perspective d'une portion de disque de soufflante après usinage durant sa réparation conformément à l'invention ;
La Figure 6 est une vue d'ensemble d'une barrette de réparation selon l'invention ;
La Figure 7 est une vue en perspective d'une portion de disque de rotor de lors de l'ajout d'une barrette de réparation conformément à l'invention ;
La Figure 8 est une vue en perspective d'une portion de disque de rotor de soufflante réparé conformément à l'invention ;
La Figure 9 est une vue en coupe longitudinale d'un écrou serti utilisé pour mettre en œuvre la réparation selon l'invention, avec la barrette de réparation selon l'invention installée ;
La Figure 10 est une vue de face d'une portion de disque réparé selon l'invention et portant une masselotte ;
La Figure 11 est une vue d'ensemble d'une variante de barrette de réparation selon l'invention.

### EXPOSÉ DÉTAILLÉ DE MODES DE RÉALISATION PARTICULIERS

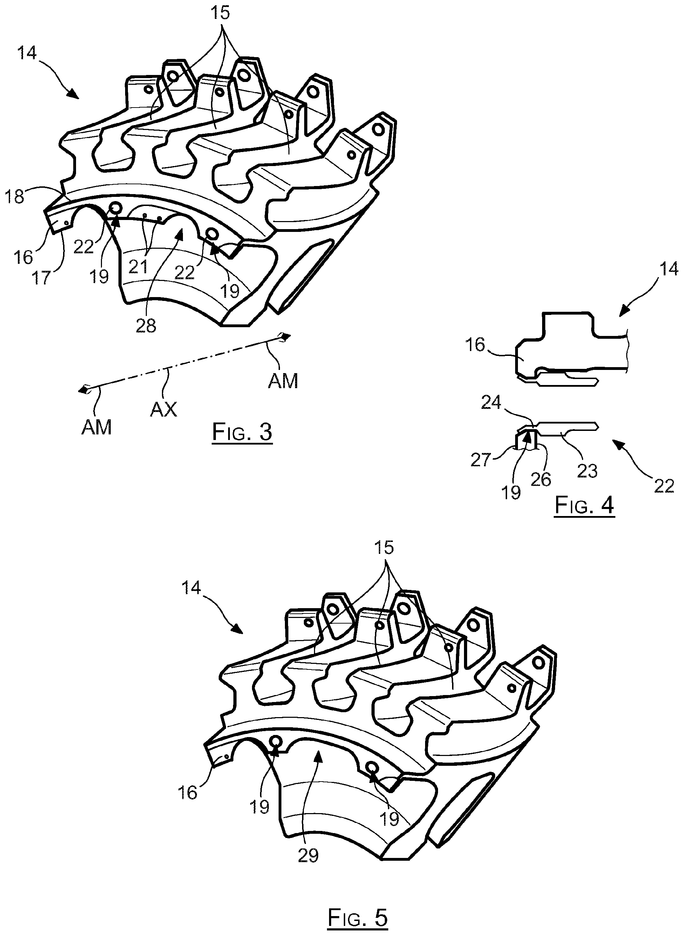

Sur la figure 3, une portion d'un disque de soufflante 14 s'étendant autour d'un axe AX comporte à sa périphérie externe une série d'embases 15 destinées à recevoir chacune un pied d'aube pour le maintenir, ces embases 15 étant régulièrement distribuées à la périphérie externe du disque 14. Chaque embase 15 a une forme générale correspondant à la partie femelle d'une liaison de type queue d'aronde, et s'étend selon une direction sensiblement parallèle à l'axe AX.

Ce disque de soufflante 14 comporte au niveau de sa face amont une couronne amont 16 sensiblement plane, formant bride, s'étendant perpendiculairement à l'axe AX. Cette couronne est située à l'amont par rapport au sens de circulation du flux dans le moteur en service, l'amont et l'aval étant repérés respectivement par AM et AV sur les figures.

Cette couronne 16 est délimitée extérieurement par un bord externe 17 circulaire et intérieurement par un bord interne 18 essentiellement circulaire, en étant reliée au corps du disque 14 par l'intermédiaire d'une portion cylindrique prolongeant son bord externe 17.

Comme visible sur la figure 3, cette couronne 16 comporte des trous de fixation 19 d'un flasque de blocage non représentés , et des trous 21 de fixation de masselottes qui sont installées lors de l'équilibrage de l'ensemble du rotor dont fait partie ce disque 14.

Chaque trou 19 est équipé d'un écrou serti correspondant 22. Comme représenté sur la figure 4, un tel écrou serti 22 comporte un corps ou tête 23 prolongé par une jupe 24 formée d'un seul tenant avec la tête. Cette jupe 24 est engagée et sertie dans le trou 21 de façon à solidariser l'écrou 22 au trou 19 qui le porte : la tête 23 est située du côté aval de la couronne et la jupe 24 traverse cette couronne pour s'étendre à l'intérieur du trou vers la face amont 27.

Dans le cas du disque 14, la couronne amont 16 est située à distance du corps de ce disque 14, un espace étant ainsi disponible entre la face aval 26 de la couronne et le corps de disque, le flasque venant quant à lui s'appliquer sur la face amont 27 de cette couronne 16.

Ainsi, et comme visible sur la figure 4, la tête 23 de l'écrou serti 22 est située du côté aval de la couronne 16, de telle sorte que la face amont 27 de cette couronne est dégagée pour recevoir le flasque, la jupe de sertissage 24 ayant le long de l'axe AX une épaisseur très légèrement inférieure à celle de la couronne 16.

Les trous 19 sont régulièrement répartis tout autour de l'axe AX en étant formés dans la couronne 16. Entre chaque paire de trous de fixation de flasque 19 consécutifs, la couronne comporte deux trous de fixation de masselottes 21 et une échancrure interne 28 formée dans le bord interne de la couronne.

Lors du démontage de masselottes portées par les trous 21, la portion de la couronne 16 portant les trous de fixation 21 peut être endommagée, au point qu'il ne soit plus possible d'y fixer à nouveau une masselotte.

Selon l'invention, on procède alors à une opération d'usinage ou analogue pour retirer cette portion de couronne endommagée, en constituant une échancrure étendue 29 dans le bord interne de la couronne 16, comme visible sur la figure 5. Cette opération permet ainsi de retirer entièrement toute la portion de couronne endommagée, sans pénaliser la fixation du flasque amont, du fait que les parties de la couronne comportant les trous 19 restent présentes. Complémentairement, les écrous sertis 22 équipant ces trous 19 sont retirés, de manière à entièrement libérer la région de fixation des masselottes.

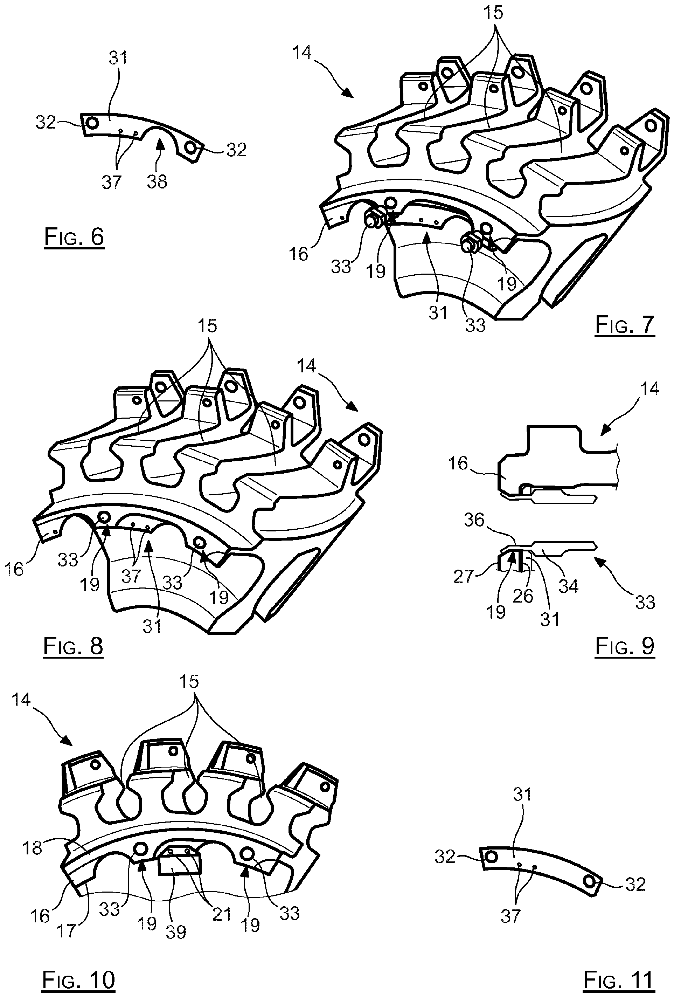

Une fois ces opérations réalisées, une barrette 31 en forme de portion de couronne, représentée seule sur la figure 6 est placée contre la face aval 26 de la couronne 16, comme visible sur la figure 7, de sorte qu'une fois qu'elle est en place, elle couvre la région qui a été retirée, comme visible clairement sur la figure 8.

Comme visible sur les figures 6 et 7, cette barrette 31 en forme de portion de couronne comporte à ses extrémités deux trous de montage 32, et elle présente une longueur correspondant à la distance séparant deux trous de fixation de flasque 19. Ainsi, les deux trous de montage 32 de la barrette 31 coïncident avec les deux trous de fixation de flasque 19 situés de part et d'autre de la portion de couronne 16 ayant été retirée.

Comme visible sur la figure 6, la barrette 31 a globalement la forme d'une portion de la couronne 16 en ayant une étendue angulaire légèrement supérieure à l'angle séparant les trous 19, mesuré autour de l'axe AX. Cette portion de couronne 16 permet ainsi de combler la portion endommagée qui a été retirée tout en étant fixée à la couronne au niveau de ses extrémités.

La barrette 31 peut avoir différentes formes, se rapprochant de celle de la portion de couronne retirée : dans l'exemple de la figure 6 elle comporte une échancrure 38 à son bord interne, permettant la fixation d'autres éléments au rotor. Selon la configuration, cette barrette peut aussi être dépourvue d'échancrure comme sur l'exemple de la figure 11.

La fixation de la barrette de remplacement 31 à la couronne 16 est assurée, comme illustré sur la figure 10 par deux écrous sertis 33 de réparation qui sont légèrement différents des écrous sertis 22 initiaux. Chaque écrou serti de réparation 33 comporte lui aussi une tête 34 prolongée par une jupe de sertissage 36, mais cette jupe de sertissage 36 est plus longue que la jupe 24 des écrous sertis initiaux 22. Cette jupe présente ainsi une longueur, le long de l'axe AX, qui correspond à l'épaisseur de la couronne 16 augmentée de l'épaisseur de la barrette 31.

La fixation de la barrette 31 est assurée en la mettant d'abord en position contre la face aval 26, puis en engageant chaque écrou serti 33 conjointement dans un trou 32 de la barrette et dans un trou correspondant 19 de la couronne 16. Une fois que l'ensemble est en place, les deux écrous 33 sont sertis, par exemple au moyen d'une pince appropriée, afin d'évaser l'extrémité amont des jupes de ces écrous de manière à les bloquer dans les trous qui les portent, conformément à la configuration de la figure 9.

Complémentairement, et comme visible sur les figures 6 à 8, la barrette 31 comporte deux trous de fixation de masselotte 37 et une échancrure 38, qui sont placés aux mêmes positions respectivement que les trous de fixation 21 et que l'échancrure 28 de la couronne 16 initiale.

Une fois que l'ensemble est en place, comme illustré sur la figure 8, une nouvelle masselotte 39 peut être fixée par rivetage dans les trous 37 de la barrette de réparation, ce qui correspond à la configuration illustrée sur la figure 10.

Après fixation de la masselotte, le flasque amont peut être rapporté sur le disque, en étant fixé à celui-ci au moyen de vis le traversant pour se visser chacun dans un écrou serti correspondant porté par la couronne 16.

Comme on le comprend, le serrage des vis de fixation du flasque rapporté dans les écrous sertis assure la fixation complète de la barrette à la couronne en pressant celle-ci efficacement contre la face aval 26 de la couronne.

En pratique, lorsqu'une portion de fixation de masselotte est endommagée sur la couronne 16, on effectue une réparation telle qu'expliquée ci-dessus à l'emplacement de l'endommagement afin de permettre la fixation d'une nouvelle masselotte. Complémentairement, on effectue la même réparation (retrait d'une portion de couronne et ajout d'une barrette pour combler la portion retirée) dans la région de la couronne diamétralement opposée à celle de l'endommagement, pour assurer que la réparation ne compromette pas l'équilibrage du disque.

Autrement dit, la différence de masse induite par l'ajout d'une barrette à l'emplacement endommagé est compensée par l'ajout d'une autre barrette dans la région diamétralement opposée de la couronne (à 180°), y compris si cette autre région n'est pas endommagée. Ainsi, il n'est pas nécessaire de procéder à un nouvel équilibrage du disque du fait que la réparation n'introduit pas de balourd.

Comme on le comprend, si plusieurs régions de la couronne sont endommagées, la réparation est appliquée à chaque région endommagée, et à chaque région située à 180° d'une région endommagée.

D'une manière générale, l'invention permet de restaurer l'interface du disque avec la masselotte par reprise mécanique de la partie de la bride endommagée sans devoir changer le disque. La barrette rapportée est avantageusement fabriquée dans le même matériau que le disque, de manière à conserver des caractéristiques mécaniques inchangées.

## Revendications

1. Procédé de réparation d'une couronne (16) d'une bride de rotor de turbomachine, cette couronne (16) comportant au moins deux trous de fixation de flasque (19) et au moins un trou de fixation de masselotte (21) situé entre les deux trous de fixation de flasque (19), chaque trou de fixation de flasque (19) étant équipé d'un écrou serti (22), la couronne (16) comportant une portion endommagée entre deux trous de fixation de flasque (19), le procédé comportant les étapes de :
- retirer les deux écrous sertis (22) ;
- retirer la portion de couronne endommagée, par exemple par usinage ;
- rapporter une barrette (31) en forme portion de couronne comblant la portion de couronne (16) retirée, cette barrette (31) comportant au moins un trou de fixation de masselotte (37), et deux trous de montage (32) ;
- fixer la barrette (31) à la couronne (16) au moyen de deux écrous sertis (33) traversant les trous de montage en étant sertis chacun dans un trou de fixation de flasque (19).

2. Procédé de réparation selon la revendication 1, dans lequel les mêmes opérations sont réalisées à un emplacement de la couronne (16) situé à 180° de la portion de couronne endommagée pour compenser le balourd introduit au niveau de la portion endommagée.

3. Procédé selon la revendication 1, dans lequel la barrette est rapportée à une face aval (26) de la couronne (16) par rapport au sens de circulation de fluide dans la turbomachine.

4. Procédé selon l'une des revendications 1 à 3, dans lequel les écrous sertis (33) utilisés pour fixer la barrette (31) ont une longueur plus importante que les écrous sertis (22) initialement montés sur la couronne (16).

5. Procédé selon la revendication 1, dans lequel la barrette (31) présente une forme comportant une échancrure (38).

6. Turbomachine comportant un rotor ayant une bride comportant une couronne réparée avec un procédé selon la revendication 1.

7. Turboréacteur comportant une turbomachine selon la revendication 6.

## Patentansprüche

1. Verfahren zur Reparatur eines Kranzes (16) eines Rotorflansches einer Turbomaschine, wobei dieser Kranz (16) mindestens zwei Flanschbefestigungslöcher (19) und mindestens ein Unwuchtmassenbefestigungsloch (21) beinhaltet, das sich zwischen den beiden Flanschbefestigungslöchern (19) befindet, wobei jedes Flanschbefestigungsloch (19) mit einer Einpressmutter (22) ausgestattet ist, wobei der Kranz (16) einen beschädigten Abschnitt zwischen zwei Flanschbefestigungslöchern (19) beinhaltet, wobei das Verfahren die Schritte beinhaltet zum:
- Entfernen der beiden Einpressmuttern (22);
- Entfernen des beschädigten Kranzabschnitts, beispielsweise durch Bearbeiten;
- Beibringen einer Leiste (31) in Kranzabschnittsform, die den entfernten Kranzabschnitt (16) ausfüllt, wobei diese Leiste (31) mindestens ein Unwuchtmassenbefestigungsloch (37) und zwei Montagelöcher (32) beinhaltet;
- Befestigen der Leiste (31) am Kranz (16) anhand zweier Einpressmuttern (33), welche die Montagelöcher durchqueren, und dabei jeweils in einem Flanschbefestigungsloch (19) gefalzt werden.

2. Verfahren zur Reparatur nach Anspruch 1, wobei dieselben Vorgänge an einer Stelle des Kranzes (16) durchgeführt werden, die sich um 180° von dem beschädigten Kranzabschnitt versetzt befindet, um die im Bereich des beschädigten Abschnitts beigebrachte Unwucht zu kompensieren.

3. Verfahren nach Anspruch 1, wobei die Leiste an einer stromabwärts gelegenen Seite (26) des Kranzes (16) in Bezug auf die Fluidzirkulationsrichtung in der Turbomaschine beigebracht wird.

4. Verfahren nach einem der Ansprüche 1 bis 3, wobei die zum Befestigen der Leiste (31) verwendeten Einpressmuttern (33) eine größere Länge aufweisen als die ursprünglich am Kranz (16) montierten Einpressmuttern (22).

5. Verfahren nach Anspruch 1, wobei die Leiste (31) eine Form aufweist, die eine Aussparung (38) beinhaltet.

6. Turbomaschine, die einen Rotor beinhaltet, der einen Flansch aufweist, der einen mit einem Verfahren nach Anspruch 1 reparierten Kranz beinhaltet.

7. Turbotriebwerk, das eine Turbomaschine nach Anspruch 6 beinhaltet.

## Claims

1. Method for repairing a ring (16) of a turbomachine rotor end plate, this ring (16) including at least two plate-securing holes (19) and at least one balance-weight securing hole (21) located between the two plate securing holes (19), each plate-securing hole (19) being equipped with a crimped nut (22), the ring (16) including a damaged portion between two plate-securing holes (19), the method including the steps of:
- removing the two crimped nuts (22);
- removing the damaged ring portion, for example by machining;
- attaching a bar (31) in the form of a ring portion making up for the removed ring portion (16), this bar (31) including at least one balance-weight fixing hole (37), and two mounting holes (32);
- attaching the bar (31) to the ring (16) by means of two crimped nuts (33) passing through the mounting holes while each being crimped in a plate-attaching hole (19).

2. Repair method according to claim 1, wherein the same operations are implemented at a point on the ring (16) located at 180° from the damaged ring portion to compensate for the imbalance introduced at the damaged portion.

3. Method according to claim 1, wherein the bar is attached to a downstream face (26) of the ring (16) with respect to the direction of circulation of fluid in the turbomachine.

4. Method according to one of claims 1 to 3, wherein the crimped nuts (33) used for securing the bar (31) have a greater length than the crimped nuts (22) initially mounted on the ring (16).

5. Method according to claim 1, wherein the bar (31) has a form including a scallop (38).

6. Turbomachine including a rotor having an end plate including a ring repaired with a method according to claim 1.

7. Turbojet engine including a turbomachine according to claim 6.
